(19) **Europäisches Patentamt**

**European Patent Office**

**Office européen des brevets**

(11) **EP 1 394 980 B1**

(12) **EUROPÄISCHE PATENTSCHRIFT**

(45) Veröffentlichungstag und Bekanntmachung des Hinweises auf die Patenterteilung:
**04.10.2006 Patentblatt 2006/40**

(51) Int Cl.:
*H04L 1/06* *(2006.01)*    *H04B 7/06* *(2006.01)*

(21) Anmeldenummer: **02018971.8**

(22) Anmeldetag: **26.08.2002**

(54) **Datenübertragung mit mehreren Sendeantennen**

Data transmission with multiple transmit antennas

Transmission de données avec plusieurs antennes d'émission

(84) Benannte Vertragsstaaten:
**AT BE BG CH CY CZ DE DK EE ES FI FR GB GR IE IT LI LU MC NL PT SE SK TR**

(43) Veröffentlichungstag der Anmeldung:
**03.03.2004 Patentblatt 2004/10**

(73) Patentinhaber: **SIEMENS AKTIENGESELLSCHAFT**
**80333 München (DE)**

(72) Erfinder:
• **Costa, Elena, Dr.**
  **85748 Garching (DE)**
• **Haas, Harald, Prof.-Dr.**
  **28759 Bremen (DE)**
• **Schulz, Egon, Dr.**
  **80993 München (DE)**

(56) Entgegenhaltungen:
**WO-A-02/35762**

• **TAROKH ET AL: "Space-time block codes from orthogonal designs" IEEE TRANSACTIONS ON INFORMATION THEORY, IEEE INC. NEW YORK, US, Bd. 45, Nr. 5, Juli 1999 (1999-07), Seiten 1456-1467, XP002161393 ISSN: 0018-9448**
• **SAMPATH H ET AL: "Joint transmit and receive optimization for high data rate wireless communication using multiple antennas" SIGNALS, SYSTEMS, AND COMPUTERS, 1999. CONFERENCE RECORD OF THE THIRTY-THIRD ASILOMAR CONFERENCE ON OCT. 24-27, 1999, PISCATAWAY, NJ, USA,IEEE, US, 24. Oktober 1999 (1999-10-24), Seiten 215-219, XP010373976 ISBN: 0-7803-5700-0**
• **ALAMOUTI S M: "A simple transmit diversity technique for wireless communications" IEEE JOURNAL ON SELECTED AREAS IN COMMUNICATIONS, IEEE INC. NEW YORK, US, Bd. 16, Nr. 8, Oktober 1998 (1998-10), Seiten 1451-1458, XP002100058 ISSN: 0733-8716**
• **MACWILLIAMS AND SLOANE: "The Theory of Error-Correcting Codes" 1977, NORTH-HOLLAND * Seite 44 - Seite 45 ***

**Beschreibung**

Die Erfindung bezieht sich auf ein Verfahren zum Übertragen von Daten in einem Kommunikationssystem mit den oberbegrifflichen Merkmalen des Patentanspruchs 1 bzw. Vorrichtungen zum Durchführen eines solchen Verfahrens.

Allgemein bekannt sind Funk-Kommunikationssysteme gemäß z.B. dem Standard GSM (Global System for Mobile communication) oder UMTS (Universal Mobile Telecommunications System), bei denen eine Vielzahl teilnehmerseitiger Stationen über Funkschnittstellen mit netzseitigen Sende- und Empfangsstationen kommuniziert. Ferner sind Daten-Kommunikationsnetze, z.B. gemäß dem Standard HiperLAN bekannt, bei denen mobile Datenstationen Kontakt mit netzseitigen Funkstationen aufnehmen.

Datenübertragungen, für welche senderseitig eine Vielzahl von Kanälen verwendet wird, um die Daten zu einer Vielzahl verschiedener empfängerseitiger Stationen zu übertragen, unterliegen in besonderem Maße Problemen durch die Mehrwegeausbreitung. Von einer Antenne abgesendete Signale laufen beispielsweise einerseits über einen direkten Weg zur empfängerseitigen Antenne andererseits aber auch nach Reflektionen an Objekten seitlich des direkten Ausbreitungsweges mit zeitlicher Verzögerung nach einer Reflektion zur empfängerseitigen Antenne. Falls die Dauer eines zu übertragenden Symbols, worunter insbesondere ein einzelnes Bit oder ein Datenpaket zu verstehen ist, größer als die Verzögerung ist, welche sich mittels einer Quadratwurzelmittelung Streuung (route mean square) bestimmen lässt, ist der gewählte Übertragungskanal als nicht frequenzselektiv oder flachausblendend (flat fading) anzusehen. In letzterem Fall entspricht der Kanal zugleich einem Subträger und weist nicht eine Vielzahl von Subträgern zur Übertragung des Symbols auf. Im entgegengesetzten Fall, dass die Symboldauer geringer als die mittlere Verzögerungsstreuung ist, wird der Kanal als frequenzselektiv ausblendend (frequency selective fading) angesehen. Dies erzeugt Inter-Symbol-Interferenz (ISI: Inter-Symbol Interference), welche die Leistungsfähigkeit mit Blick auf Übertragungsrahmen-Fehler nachteilhaft beeinflusst, wenn nicht ausgleichende Verfahren verwendet werden.

Geplant ist, dass mobile Kommunikationssysteme jenseits der dritten Generation Teilnehmer-Datenraten verwenden sollen, welche in einer zellularen Umgebung.größer als 20 Mbps sind. Bei einer spektralen Effizienz von etwa 1bit/s Hz/Zelle beträgt die erforderliche gesamte Bandbreite bis zu 20 MHz. Folglich beträgt die Bitdauer etwa 50 ns. Bei einer typischen mittleren Verzögerungsspreizung (rms delay spread) von bis zu 10 μs in einer Makro-Zellen-Umgebung würde ein übertragenes Symbol 200 nachfolgende Symbole stören, was zu einem erheblichen Signalverarbeitungsaufwand führen würde. Folglich werden Zugriffsverfahren entwickelt, die für die vorstehend bezeichneten Anforderungen besser ausgelegt sind. Ein möglicher Kandidat ist das sogenannte OFDM (Orthogonal Frequency Division Multiplexing), bei welchem die zu versendenden Daten vor dem Versand auf verschiedene Übertragungsfrequenzen von entsprechenden Subträgern innerhalb eines Frequenzbandes multiplext werden, wobei die einzelnen Subträger orthogonal zueinander sind. Nachteile von OFDM liegen in dem hohen Spitzen-zu-Durchschnitts-Leistungsverhältnis, dem Erfordernis einer Trägersynchronisation, Kapazitätsverlusten aufgrund eines erforderlichen Schutzintervalls zwischen einzelnen Datenblöcken und einer erforderlichen Kanalabschätzung für jeden Subträger oder zumindest eine Anzahl von Subträgern.

Aus WCDMA (Wideband Code Division Multiple Access) des UMTS-Standards, bei dem eine Teilung und Kodierung der zu versendenden Daten breitbandig erfolgt, sind auch frequenzselektive Ausblendkanäle (frequency selective fading channels) bekannt. Die Mehrwegeausbreitung in diesen Systemen zerstört jedoch die Orthogonalität der Spreizcode. RAKE-Empfänger können verwendet werden, um die Mehrwegekomponenten konstruktiv zu kombinieren.

Bei der Verwendung mehrerer Sendeantennen wird empfängerseitig ein überlagertes Signal empfangen, welches über eine entsprechende Vielzahl von Laufwegen gelaufen ist. Dies führt empfängerseitig zu störenden Interferenzen.

Aus dem Artikel Tarokh et al "Space-Time Block Codes from Orthogonal Designs", DEEE Transactions on Information Theory, Vol. 45, No. 5, July 1999, 5-1456-1467, ist bekannt, eine sogenannte Raum-Zaf-Blockcodierung durchzuführen, bei dem codierte Daten in eine Anzahl Datenströme aufgeteilt werden und die Datenströme über eine entsprechende Anzahl Sendeantennen parallel ausgesendet werden.

Die Aufgabe der Erfindung besteht darin, ein Verfahren und Vorrichtungen zum Durchführen des Verfahrens zu entwickeln, welche eine alternative Verfahrensweise zur Übertragung von Daten ermöglichen.

Diese Aufgabe wird durch ein Verfahren zum Übertragen von Daten in einem Kommunikationssystem und Vorrichtungen zum Durchführen eines solchen Verfahrens mit den Merkmalen der unabhängigen Patentansprüche gelöst. Vorteilhafte Weiterbildungen der Erfindung sind den abhängigen Patentansprüchen entnehmbar.

Vorteilhaft ist somit ein Verfahren zum Übertragen von Symbolen, insbesondere in Form von Daten, über eine Funkschnittstelle in einem Kommunikationssystem zwischen zumindest einer sendenden Station mit einer Vielzahl von räumlich beabstandeten Antennen und zumindest einer empfangenen Station, bei dem zu versendende Symbole vor dem Versenden mit einem Code codiert werden, wobei eine Vielzahl, zumindest zwei zu einem Zeitpunkt zu versendende Symbole abhängig von der Codierung jeweils einer der räumlich beabstandeten Antennen zugeordnet und zu diesem Zeitpunkt zugleich über nur diese Antenne versendet werden. Diese codeabhängige Zuweisung einer einzelnen Antenne zu den zu versendeten Symbolen, insbesondere einzelnen Daten, Bit oder codierten Werten, führt zu einer räumlichen Codierung. Unter Antenne sind dabei auch räumlich beabstandete Antennenelemente einer komplex aufgebauten Antenne und dergleichen zu verstehen. Alternativ kann die Zuordnung der eingehenden Symbole auch zu mehreren der Vielzahl von Antennen vorgenommen werden, was zumindest zu einer Reduzierung der Interferenzen gegenüber der Verwendung aller Antennen führt.

Zweckmäßigerweise bildet die Codierung die Vielzahl der Symbole auf ein insbesondere einziges zu versendendes codiertes Symbol ab, so dass stets nur eine Antenne auf einer Ressource, z.B. Frequenz, sendet und somit Interferenzen vermieden werden. Möglich sind alternativ aber auch Codierungen, bei denen eine Abbildung auf eine begrenzte Anzahl der verfügbaren Antennen vorgenommen wird.

Bei der Zuordnung der Antenne zum Versenden des codierten Symbols wird vorteilhafterweise eine Hadamard-Matrize verwendet, welche stets der Bedingung einer Modulo 2 Summe von Null unterliegt. Bei der Zuordnung der Antenne zum Versenden des codierten Symbols wird somit vorteilhafterweise ein Walsh-Hadamard-Code abhängig von dem Wert der zugleich zu übertragenden Symbole eindeutig zugeordnet.

Bei der Zuordnung der Antenne zum Versenden des codierten Symbols kann einfach eine Multiplikation einer Matrize mit einer Vielzahl von Symbolen und der Hadamard-Matrize verwendet werden, wobei die Zeilen der Matrize aus Symbolen der Bedingung unterliegen, dass deren Modulo-2-Summe gleich Null ist. Bei der Bestimmung der Antenne wird den Diagonalelementen einer aus der Matrizenmultiplikation entstehenden resultierenden Matrize jeweils eine der Antennen zugeordnet, wobei durch die Modulo-2-Bedingung für die Matrize aus Symbolen und der Hadamard-Matrize nach der Matrizenmultiplikation nur eines der Diagonalelemente ungleich Null ist. Folglich sendet jeweils nur eine einzige Antenne der Vielzahl von Antennen, wodurch eine räumliche Codierung entsteht.

Während bei dem bevorzugten Ausführungsbeispiel die Bedingung gesetzt wird, dass die Modulo-2-Summe der Zeilen der Symbol-Matrize gleich Null ist, können auch andere Werte festgesetzt werden, wobei dann entsprechende Änderungen am Code bzw, der Code-Matrize vorzunehmen sind.

Vorteilhaft ist, bei der Zuordnung der Antenne bzw. der begrenzten Anzahl von Antennen zum Versenden des codierten Symbols eine Multiplikation einer Matrize mit einer Vielzahl von Symbolen und einer Code-Matrize zu verwenden. Dabei stellt die aus der Matrizenmultiplikation resultierende Matrize eine bezüglich der Symbole der Matrize ein-eindeutige Abbildung dar und bietet dadurch in ganz allgemeiner Weise eine Abbildung verschiedener zu versendender Symbole auf die einzelnen Antennen der Gruppe von Antennen. Vorteilhafterweise sind dabei verschiedenste Kombinationen umsetzbar. So können mehrere eingehende Symbole auf ein einziges zu übertragendes Symbol abgebildet werden, welches dann über eine einzige der Antennen versendet wird. Das Symbol kann alternativ auch über mehrere ausgewählte der Antennen gesendet werden. Möglich ist aber auch eine ein-eindeutige Abbildung eines oder mehrerer eingehender Symbole auf zwei oder mehr zu übertragende Symbole, die dann über verschiedene der Antennen übertragen werden. Letztendlich entscheidend ist, dass empfängerseitig bzw. die empfangende Station den verwendeten Code oder die Code-Matrize kennt und außerdem Kenntnis von den verwendeten Sendeantennen hat, so dass aus dem empfangenen Symbol bzw. den empfangenen Symbolen eine ein-eindeutige Rekonstruktion der ursprünglichen Symbole möglich ist.

In der empfangenden Station kann ein empfangenes codiertes Symbol mit Hilfe der Kenntnis über die beim Senden verwendete Codierung, insbesondere die Hadamard-Matrize einfach rücktransformiert werden. Um in der empfangenen Station die Kenntnis der beim Senden verwendeten Antenne bei der Rücktransformation der Symbole verwenden zu können, bietet sich insbesondere eine eigenständige Bestimmung durch Messung der Empfangsrichtung empfangener Signale an, beispielsweise die Anwendung eines üblichen Abschätzungsverfahrens. Alternativ ist aber z.B. auch die direkte Übertragung der verwendeten Sendeantenne mit Hilfe eines Rundfunkkanals oder dergleichen möglich, wenn auch nicht bevorzugt.

Möglich ist nicht nur die Übertragung einer Folge zu codierender Symbole an eine Anzahl verschiedener empfangender Stationen sondern auch die Übertragung eines Datenstroms aus mehreren Symbolen für eine einzige empfangende Station. Insbesondere ist auch eine Kombination möglich, d.h. die Übertragung einer Vielzahl von Symbolen, von denen mehrere an eine jeweils gleiche Station gesendet werden und andere an eine oder mehrere andere Stationen übertragen werden.

Die Bestimmung der Antenne für den Versand eines Datenwerts, Datenblocks oder Symbols ist folglich dadurch vorteilhaft, dass empfängerseitig ein Empfang über stets nur einen aus einer Vielzahl verschiedener Laufwege erfolgt. Dadurch wird eine Interferenz vermieden, die ansonsten durch das gleichzeitige Aussenden eines Signals von verschiedenen Antennen zu insbesondere einem einzigen Empfänger entstehen kann. Anstelle einer ansonsten für sich bekannten Spreizung auf verschiedene frequenzselektive Subträger innerhalb eines Frequenzbandes oder zusätzlich dazu wird hier somit eine räumliche Codierung vorgenommen.

Zweckmäßigerweise erfolgt die Bestimmung der Antenne zum versenden für die Daten jeweils pro Datensymbol oder pro Bit, so dass bei der Übertragung von Sprachdaten, bei der der Verlust einzelner Sprachelemente nicht sehr kritisch ist, dennoch ein sehr hoch qualitatives Empfangssignal regeneriert werden kann.

Vorrichtungen zum Durchführen eines solchen Verfahrens, insbesondere eine netzseitige Sende- und Empfangseinrichtung sowie eine teilnehmerseitige Station weisen zweckmäßigerweise neben einer ausreichend dimensionierten Steuer- und Verarbeitungseinrichtung auch einen Speicher auf, in dem eine geeignete Hadamard-Matrize sowie Algorithmen zur Durchführung des Verfahrens hinterlegt sind.

Ein Ausführungsbeispiel wird nachfolgend anhand der Zeichnung näher erläutert. Es zeigen:

FIG 1    eine Anordnung von sendenden und empfangenden Einrichtungen eines Kommunikationssystems sowie Datenanteile, welche senderseitig gemäß der skizzierten Formelanordnung den senderseitigen Antennen zugeordnet werden, wobei Daten für verschiedene empfangende Stationen zu übertragen sind, und

FIG 2    eine solche Anordnung, wobei verschiedene Daten für eine einzige empfangende Station zu übertragen sind.

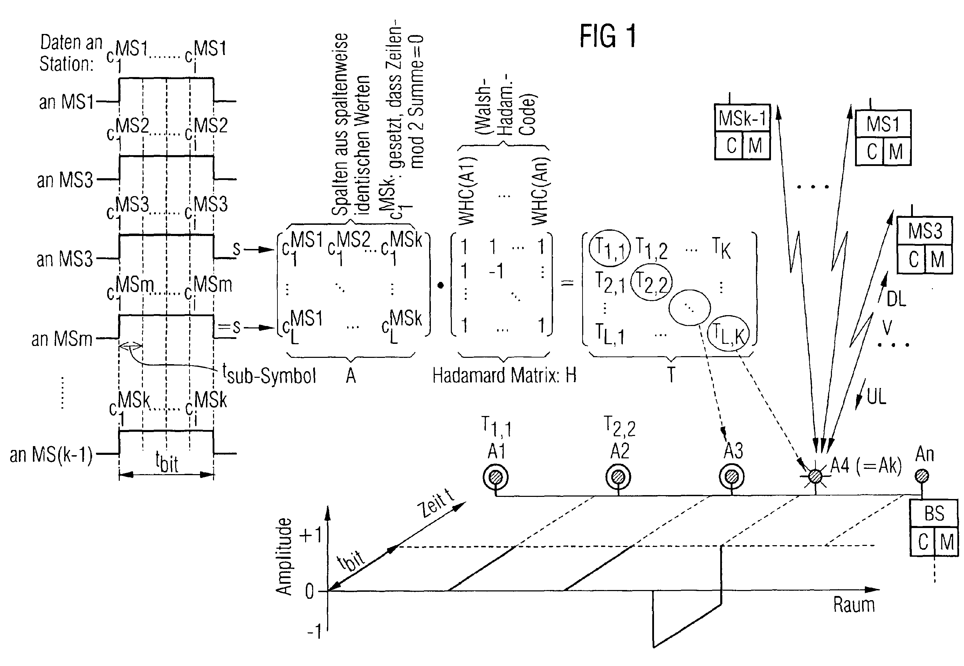

Wie aus FIG 1 ersichtlich ist, besteht ein Kommunikationssystem aus einer Vielzahl verschiedenartigster Einrichtungen. Netzseitig ist dies eine Vielzahl von Antennen A1, A2, A3, ... An, welche als Antennengruppe einer netzseitigen Sende- und/oder Empfangseinrichtung BS zugeordnet sind. Diese Sende- und/oder Empfangseinrichtung BS weist zweckmäßigerweise einen Speicher M zum Hinterlegen von betriebserforderlichen Daten und Algorithmen sowie eine Steuereinrichtung C zum Durchführen der erforderlichen Betriebsabläufe auf. Die Steuereinrichtung C sowie der Speicher M können vorteilhafterweise für die Durchführung des nachfolgend beschriebenen Verfahrens verwendet werden. Üblicherweise ist die Sende- und/oder Empfangseinrichtung BS direkt oder indirekt mit weiteren netzseitigen Einrichtungen, beispielsweise einer Basisstations-Steuereinrichtung, einem Betriebs- und Wartungszentrum sowie Schnittstellen zu anderen Kommunikationsnetzen verbunden, wobei diese zur Vereinfachung der Darstellung nicht abgebildet sind.

Außerdem weist das Kommunikationssystem eine Vielzahl von mobilen oder stationären teilnehmerseitigen Stationen MS1, MS2, ... MS(k-1) auf, beispielsweise Mobilfunkgeräte oder mobile Datenterminals. Diese teilnehmerseitigen Stationen MS1, MS2, ... MS(k-1) weisen ebenfalls einen Speicher M und eine Steuereinrichtung C auf, welche für den Betrieb der Station und das Durchführen des nachfolgend beschriebenen Verfahrens eingesetzt werden.

Dargestellt ist somit eine Anordnung von n Antennen A1, A2, ..., An einerseits, welche für das beschriebene Verfahren als Sendeelemente betrachtet werden, und von andererseits k-1 teilnehmerseitigen Stationen MS1,..., MS(k-1), welche für das nachfolgend beschriebene Verfahren als empfangende Elemente, Stationen bzw. Vorrichtungen angesehen werden. Eine umgekehrte Anwendung des Verfahrens ist auch möglich, wobei dann vorzugsweise eine Koordination und ein entsprechender Daten- und Informationsaustausch zwischen den einzelnen teilnehmerseitigen Stationen eingerichtet wird.

Bei dem nachfolgend beschriebenen Verfahren wird die räumliche Dimension für ein neues Übertragungsschema ausgenutzt. Zu übertragende Daten bzw. Informationen werden dabei unter Verwendung der Hadamard-Matrize multiplext. Dieses Multiplexing erzeugt verschiedene Signale. Diese Signale werden der Antennegruppe A1, ..., An zugeführt. Dies führt zu einer Codierung der Daten in räumlicher Hinsicht. Diese Codierung kann zusätzlich oder alternativ zu einer Spreizung im Frequenz- oder Zeitbereich vorgenommen werden. Multiplext und übertragen werden Symbole, worunter jegliche Form von Daten und Informationen verstanden werden kann, insbesondere ein einzelnes Datenbit, eine Gruppe von Datenbit und/oder codierte Anteile davon.

Die Symboldauer kann durch die Anzahl der Antennen A1, ..., An beeinflusst werden. Allgemein ähnelt die Verfahrensweise der zeitlichen Expansion unter Verwendung verschiedener Sub-Träger in den für sich bekannten OFDM-Verfahren. Dabei wurden bislang Breitbandsysteme für digitale Rundfunksendungen oder funkgestützte lokale Datennetze verwendet. In diesen Systemen werden in erster Linie OFDM und Abwandlungen davon verwendet. Bislang werden keine zellularen Breitbandsysteme mit hoher Datenrate verwendet. Derartige Systeme sind Ziel von Kommunikationssystemen der sogenannten 4-ten Generation. Während das nachfolgend beschriebene Verfahren auch auf ältere Systeme anwendbar ist, zielt es insbesondere auf solche Systeme 4-ter Generation.

Der linke Abschnitt der FIG 1 zeigt in der Sende- und Empfangseinrichtung BS oder der Basisstation eintreffende Daten zur Weiterleitung über die Antennen A1, ..., An und die Schnittstelle V an die empfangenden Stationen MS1, ..., MS(k-1). Wie daraus ersichtlich ist, sollen beispielhaft Daten zu k-1 teilnehmerseitigen Stationen MS1, MS2, ... MS(k-1) als empfangende Stationen übertragen werden. Die dargestellten Symbole sollen dabei z.B. aus jeweils einem Datenbit bestehen. Außerdem wird ein Hilfs-Symbol übertragen, so dass insgesamt k Symbole übertragen werden. In der Darstellung ist eine hilfsweise Untergliederung in i Sub-Perioden $c_1^{MS1}$, $c_2^{MS1}$, ... $c_i^{MS1}$ dieses Codes skizziert, wobei die Sub-Perioden jeweils für die Vielzahl der dargestellten Stationen MS1,...MS(k-1) und das Hilfs-Symbol skizziert sind. Jede Sub-Periode hat dabei eine zeitliche Dauer $t_{sub}$, welche der Gesamtdauer $t_{bit}$ des Symbols geteilt durch die Anzahl der Symbole entspricht. Die Gesamt-Symboldauer $t_{bit}$ hängt somit von der Anzahl der für die Codierung eines Datenbit oder dergleichen verwendeten Sub-Perioden ab. Die Anzahl der Sub-Perioden ist identisch der Anzahl der Antennen A1, ..., An, wobei k = n gilt.

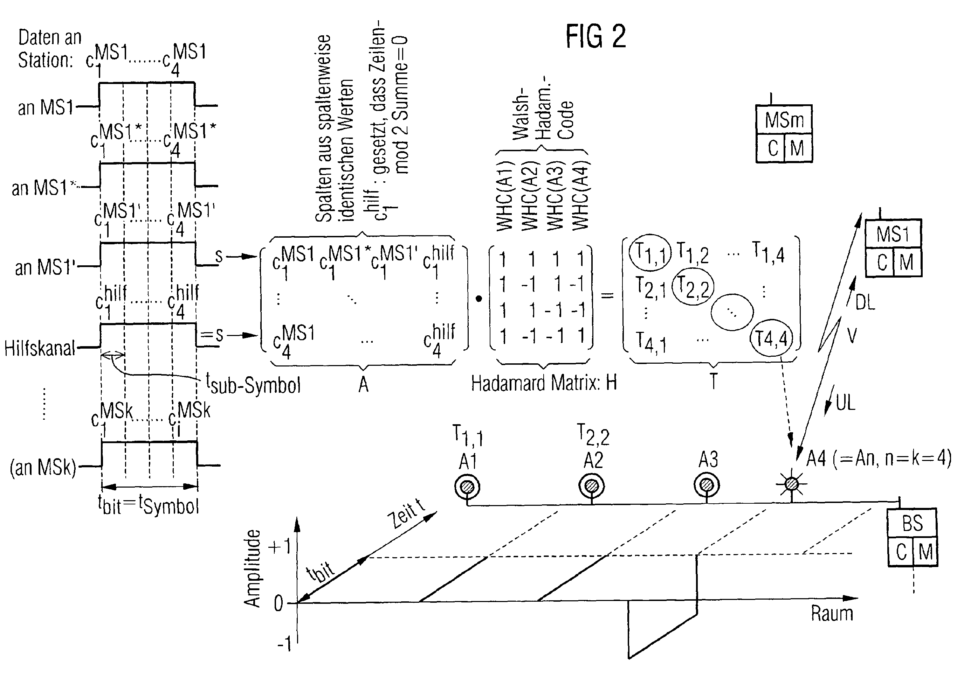

Alternativ können anstelle der Übertragung von Symbolen für eine Vielzahl verschiedener teilnehmerseitiger Stationen MS1, ... MS(k-1) auch aufeinander folgende Symbole bzw. Daten für eine einzelne teilnehmerseitige Station MS1 derart bereitgestellt werden, wie dies anhand FIG 2 veranschaulicht wird. Natürlich sind auch Mischformen dieser beiden Arten der Datenbereitstellung möglich.

Dargestellt sind in den FIG 1 und 2 somit k-1 Symbole bzw. Daten zur Übertragung an k-1 teilnehmerseitigen Stationen MS1, ... MS(k-1) bzw. 3 Symbole für eine einzige solche teilnehmerseitige Station MS1. Die Symboldauer $t_{bit}$ ist in i Sub-Perioden unterteilt. Die erste, zweite, ... i-te Sub-Periode für jede teilnehmerseitige Station MS1,... MS(k-1) bildet ein Symbol der Länge k-1.

Wie dies in dem mittleren Bereich von FIG 1 mit den Formeln skizziert ist, werden die einzelnen Sub-Perioden $c_1$, $c_2$, ... $c_i$ in Form einer Matrize S angeordnet. Dazu werden die einschließlich des Hilfssymbols k zu übertragenden Symbole zu einem Zeilenvektor s zusammengesetzt. Anschließend wird der Zeilenvektor k mal identisch zu einer k $\times$ k-Matrize S zusammengefügt. Die derart erzeugten und angeordneten k Symbole bzw. der Zeilenvektor s werden mit jeweils einem verschiedenen Walsh-Hadamard-Code WHC(A1), ..., WHC(An) mit n = k multipliziert. Mathematisch führt dies zu einer Multiplikation der Matrize **S** mit den Codes bzw. der Hadamard-Matrize **H**, welche sich aus den einzelnen Walsh-Hadamard-Codes WHC(A1), ..., WHC(An) zusammensetzt. Die Multiplikation führt zu einer resultierenden Matrize **T**.

Der Vorteil der Verwendung einer Hadamard-Matrize **H** besteht darin, dass unter der Annahme, dass die Modulo-Zwei-Summe aller Symbole null ist, dann nur ein Element der Hauptdiagonale der resultierenden Matrize **T** von null verschieden ist.

Von der aus der Matrizenmultiplikation resultierenden Matrize **T** werden die einzelnen Diagonalelemente $T_{1,1}$, $T_{2,2}$ ... $T_{i,k}$ jeweils einer der Antennen A1, A2, ... bzw. An der Sendeund/oder Empfangseinrichtung BS zugeordnet, wobei n = k gilt. Durch die Vor-Codierung mehrerer zu übertragender Symbole und die Verwendung der Hadamard-Matrize **H** ergibt sich der Vorteil, dass stets nur eines der Diagonalelemente $T_{1,1}$, ... $T_{i,k}$ ungleich dem Wert "0" ist. Entsprechend wird stets nur einer einzigen der Antennen A1, ... An ein Sendesignal zugeführt, so dass eine sowohl räumliche als auch zeitliche Trennung der ausgesendeten k Symbole bzw. k-1 Nutzdaten-Symbole erfolgt. Nur eine einzige Antenne A1,... An sendet somit während einer Symbolperiode $t_{bit}$. Die Symboldauer $t_{bit}$ ist dieselbe wie für eine teilnehmerseitige Station, jedoch werden k Symbole übertragen, wobei das eigentlich zu übertragende Symbol bzw. der eigentlich zu übertragende Datenwert mit k-1 anderen Symbolen codiert wird. Dies führt zu einer Erhöhung der spektralen Effizienz.

Empfängerseitig, dass heißt seitens der teilnehmerseitigen Stationen MS1, ... MS(k-1), ist die Information erforderlich, von welcher der k verschiedenen Antennen A1, ... An mit n = k das empfangene Datensymbol bzw. die empfangenen Daten ausgesendet wurde. Diese Erkenntnis kann durch eine parallele Übertragung einer entsprechenden Information über einen Rundfunkkanal oder vorzugsweise durch eine räumliche Verarbeitung, z.B. sogenanntes Strahlformen (beamforming) oder antennenspezifische Signatur-Wellenformung erlangt werden. Wenn die sendende Antenne A1, ... Ak und das Empfangssignal richtig erfasst wurden, können das bzw. die empfangenen Symbole durch eine Multiplikation des empfangenen Signals mit der j-ten Spalte der Hadamard-Matrize **H** zurückgewonnen werden, wobei j der Antennennummer der sendenden Antenne A1, ... Ak entspricht.

Entsprechend muss in der empfangenden teilnehmerseitigen Station MS1, ... MS(k-1) die senderseitig verwendete Hadamard-Matrize **H** ebenfalls vorliegen. Die Hadamard-Matrize **H** wird entsprechend in dem Speicher M einer jeden teilnehmerseitigen Station MS1, ... MS(k-1) temporär oder dauerhaft hinterlegt. Eine temporäre Hinterlegung bietet den Vorteil, dass die Hadamard-Matrize H jeweils beim Einbuchen in einem neuen Kommunikationssystem oder einer neuen Zelle eines solchen Kommunikationssystems an die teilnehmerseitige Station MS1, ... MS(k-1) übertragen werden kann und somit stets aktualisierbar ist.

Zur Erstellung der Matrize **S**, welche die Bedienung erfüllen soll, dass die Modulo-Zwei-Summe aller Symbole einer Zeile bzw. eines Zeilenvektors **s** gleich Null ist, kann beispielsweise ein Hilfskanal definiert werden, welcher vorliegend durch das Hilfs-Symbol belegt wird. Die Umsetzung erfolgt z.B. durch Bit-Stuffing oder Paritäts-Prüfcodes. Falls, wie z.B. in FIG 2 vier Antennen A1, ..., A4 verfügbar sind, können drei Symbole multiplext werden, die aus Nutzdaten gebildet werden. Ein vierter Symbolplatz wird als Hilfskanal verwendet, welcher sicherstellt, dass die Modulo-Zwei-Summe gleich Null ist. Anhand der nachfolgenden Tabelle mit Datensequenzen wird die Funktionalität des Hilfskanals veranschaulicht.

|  | Symbol n | Symbol n+1 | Symbol n+2 |
|---|---|---|---|
| Kanal 1 | 0 | 1 | 1 |
| Kanal 2 | 1 | 1 | 1 |
| Kanal 3 | 1 | 0 | 1 |
| Hilfskanal | 0 | 0 | 1 |

In dem Feld des Hilfskanals wird dabei stets wahlweise eine Null oder eine Eins eingesetzt, je nachdem, ob die Summe der darüber stehenden Ziffern die Bedingung der Modulo-Zwei-Summierung erfüllt. Durch den Hilfskanal wird eine Überlast erzeugt, im vorliegenden Fall 1/4 = 25%. Diese nimmt mit der Anzahl der verwendeten Antennen A1, ... An ab und ist von den Kanalcharakteristika unabhängig. Bei 10 Antennen liegt die Überlast z.B. nur noch bei 10%. Bei OFDM-Systemen ist in Vergleich dazu die Überlast aufgrund der Schutzzeit (guard time) von den Kanalcharakteristika abhängig und liegt zwischen 15% und 30%.

Bei dem Aufbau einer solchen Tabelle für vier Antennen A1, ...A4 als Basis bestehen theoretisch $2^4 = 16$ Kombinationsmöglichkeiten, welche sich durch die Verwendung des Hilfskanals auf $2^3$ reduzieren. Der Hilfskanal dient dazu, nach einer ungraden Anzahl von 1-en zu suchen und in seinem entsprechenden Feld das Bit auszutauschen, wenn die Spalte inklusive seines eigenen Feldes einen ungraden Wert hat. Dadurch wird die Modulo-Zwei-Bedingung erfüllt. Durch die Eigenschaft, dass vier linear unabhängige Kombinationen übrig bleiben, entsprechen diese genau denen der Hadamard-Matrize H. Diese Eigenschaft wird bei der hier beschriebenen Verfahrensweise ausgenutzt.

Die Orthogonalität der Walsh-Hadamard-Codes wird durch eine Mehrwege-Ausbreitung der Signale nicht zerstört, da die Mehrweg-Teilnehmersignale vor der Übertragung kombiniert, dass heißt mit Walsh-Hadamard-Codes multipliziert werden und die Symboldauer $t_{bit}$ unverändert bleibt. Im Vergleich dazu akkumulieren sich bei CDMA-Systemen die Mehrteilnehmersignale auf der Luftschnittstelle mit einer Chipdauer wesentlich geringer als der Symboldauer.

Beispielhaft für die in FIG 2 skizzierte Verfahrensweise wird nachfolgend ein System mit vier Antennen A1, A2, A3, A4 und vier zu übertragenden Symbolen s betrachtet, wobei die zu übertragenden Symbole s z.B. aufeinander folgend zu drei verschiedenen teilnehmerseitigen Stationen oder, wie dargestellt, zu einer einzigen dieser Stationen MS1 zu übertragen sind.

Innerhalb einer Zeitdauer $t_{bit}$ sollen vier Symbole übertragen werden, wobei nach der Vorkodierung durch das Erzwingen der Mod-2-Summe gemäß nachfolgender Ausführung und FIG 2 die Abfolge der Sequenz beschrieben werden kann s = {-1 1 1-1}. Die drei ersten Stellen entsprechen den zu übertragenden Nutz-Symbolen bzw. Nutz-Datenbit. Die vierte Stelle entspricht dem Hilfsbit bzw. Hilfssymbol, welches so gesetzt wird, dass die Mod-2-Summe des Vektors gleich Null wird. Die Sequenz s aus vieren dieser Symbole bzw. Abfolgen wird vervierfacht in Zeilenform zu der Symbolmatrize S zusammengesetzt:

$$\mathbf{S} = \begin{pmatrix} -1 & 1 & 1 & -1 \\ -1 & 1 & 1 & -1 \\ -1 & 1 & 1 & -1 \\ -1 & 1 & 1 & -1 \end{pmatrix}.$$

Die Hadamard-Matrize H für vier Antennen A1, ..., A4 setzt sich aus vier Walsh-Hadamard-Codes als Spaltenvektoren zusan men:

$$H = \begin{pmatrix} 1 & 1 & 1 & 1 \\ 1 & -1 & 1 & -1 \\ 1 & 1 & -1 & -1 \\ 1 & -1 & -1 & 1 \end{pmatrix}.$$

Während für die zu übertragenden Symbole und bei der Erzeugung der Walsh-Hadamard-Codes als Werte die Ziffern "0" und "1" verwendet wurden, wird für die Übertragung über die Funk-Schnittstelle V eine Umcodierung verwendet, wobei anstelle des undefinierten Zustandwertes "0" der negativ definierte Wert "-1" übertragen und entsprechend beim Aufbau der Matrizen verwendet werden. Die durch die Multiplikation der Matrize S und der Matrize H resultierende Matrize T ergibt sich zu

$$T = S \cdot H = \begin{pmatrix} 0 & 0 & 0 & -4 \\ 0 & 0 & 0 & -4 \\ 0 & 0 & 0 & -4 \\ 0 & 0 & 0 & -4 \end{pmatrix}.$$

Wie dies ersichtlich ist, ist lediglich ein einziges Element der Diagonale aus der resultierenden Matrize **T**, hier das letzte Diagonalelement $T_{4,4}$, ungleich Null. Dieses Diagonalelement $T_{4,4}$ ist im vorliegenden Fall der vierten Antenne A4 aus der Antennengruppe A1, ..., A4 zugeordnet. Über die Antenne A4 wird entsprechend ein negativer Wert -4 bzw. nach einer Normierung ein negativer Wert -1 ausgesendet.

Bei der Dekodierung in der empfangenden Station MS1 wird die Kenntnis, dass die vierte Antenne A4 gesendet hat, verwendet. Der Walsh-Hadamard-Code WHC(A4), welcher der vierten Antenne A4 zugeordnet ist, ist der vierte Spaltenvektor **h** = {1 -1 -1 1}. Das Endergebnis der empfängerseitigen Signalrekonstruktion ist somit -4 (bzw. -1> ·{1 -1 -1 1} = {-4 4 4 -4}, was nach einer Normierung durch die Anzahl von Antennen {-1 1 1 -1} ergibt. Dies entspricht exakt der Abfolge, die zu übertragen war. Empfängerseitig kann somit mit Hilfe der Kenntnis der verwendeten Hadamard-Matrize sowie der Kenntnis, welches Antennenelement bzw. welche Antenne A4 der Antennengruppe A1, ... A4 gesendet hatte, eine Rücktransformation zu diesem Ergebnis vorgenommen werden. Damit liegen in der empfangenden Station MS1 drei Symbole mit Nutzdaten vor, obwohl nur eine Symbolübertragung vorgenommen wurde. Das vierte rekonstruierte Symbol entspricht als Überlast dem ursprünglichen Hilfs-Symbol und ist folglich nicht aussagekräftig.

Dieses Multiplexverfahren unter Verwendung der Hadamard-Matrize **H** ermöglicht Übertragungen mit hoher Datenrate über die Funkschnittstelle V durch die Kombinierung der räumlichen Codierung mittels der Mehr-Antennentechnik für funkgestützte Kommunikationen. Die Vorteile sind ähnlich denen, welche durch das für sich bekannte OFDM-Verfahren erzielt werden, umgeht aber vorteilhafterweise die vorstehend beschriebenen Nachteile des OFDM-Verfahrens.

Einsetzbar ist diese Verfahrensweise besonders vorteilhaft bei Übertragungen in Abwärtsrichtung DL (Down Link), und zwar vor allem dann, wenn verschiedene Typen von Diensten mit verschiedenen Datenraten verwendet werden. Bei der derzeitigen Entwicklung der Technik wird zudem erwartet, dass zukünftige funkgestützte Datendienste einen unterschiedlichen Verkehr für Aufwärtsverbindung und Abwärtsverbindung haben werden, da mit wenigen Datenpaketen Informationen angefordert werden, welche üblicherweise einen sehr großen Datenumfang haben werden. Diesbezüglich wird die Abwärtsverbindung allgemein als die Schwachstelle mit einer beschränkten Verbindungskapazität angesehen. Beispielhaft kann sogenanntes Webbrowsing genannt werden, bei welchem bereits jetzt erheblich höhere Abwärtsverbindungs-Kapazität als Aufwärtsverbindungs-Kapazität aufgrund von Datei-Herunterladen etc. üblich ist.

Rein prinzipiell ist aber auch ein Einsatz in Aufwärtsverbindung möglich, wenn entsprechende Programmierungen in den teilnehmerseitigen Stationen MS1, ... MS(k-1) vorgenommen werden. Insbesondere bei untereinander verbundenen bzw. kommunizierenden teilnehmerseitigen Stationen oder teilnehmerseitigen Stationen, welche über mehrere Kanäle senden können, ist ein Einsatz der vorstehend beschriebenen Verfahrensweise prinzipiell möglich. Entsprechend kann allgemein von einem Verfahren gesprochen werden, welches für die Situation anwendbar ist, bei der eine Vielzahl von sendenden Einrichtungen bzw. Antennen zur Übertragung verschiedener Symbole bzw. Daten verwendet wird. Empfängerseitig ist zweckmäßigerweise ebenfalls eine Vielzahl von Empfangseinrichtungen, insbesondere teilnehmerseitigen Mobilstationen bereitgestellt.

Die vorstehende Übertragung an maximal k-1 empfangende Stationen dient lediglich zur besseren Veranschaulichung und Differenzierung zwischen Daten-Symbolen und dem Hilfs-Symbol. Natürlich ist unter Einsatz der üblichen Verfahren zur Übertragung von Signalen an verschiedene einer Vielzahl von Stationen auch mit dem hier beschriebenen Verfahren eine Übertragung an mehr als k-1 empfangende Stationen möglich.

Auch kann eine Antennenanordnung verwendet werden, die mehr als n = k Antennen oder Antennenelemente aufweist. Dies ermöglicht dann eine räumliche Codierung unter Einsatz einer Antellenanzahl, welche der zugleich zu übertragenden Symbole entspricht. Je größer die Antennenanzahl ist, desto größer ist allerdings der senderseitige und der empfängerseitige Rechenaufwand. Andererseits verbessert sich das NutzlastVerhältnis mit zunehmender Anzahl von verwendeten Antennen, welche letztendlich räumliche Codeelemente darstellen.

Rein prinzipiell sind auch Antennenanordnungen möglich, bei denen gleichzeitig zwei oder mehr Antennen senden, wobei dann jedem Antennenmuster anstelle der Antennennummern ein Code zugeordnet wird. Zwar erhöht sich dadurch die Vielfalt der verfügbaren Code und damit zugleich mit einem Sendevorgang übertragbaren Symbole, jedoch besteht, sofern nicht verschiedene Frequenzen verwendet werden, wieder eine jedoch reduzierte Gefahr von Interferenzen, welche gemäß dem vorstehend beschriebenen Verfahren eigentlich vermieden werden können und sollten. Außerdem müssen die empfangenden Stationen dann in der Lage sein, zwei oder mehr Signale gleichzeitig zu empfangen und den sendenden Antennen eindeutig zuzuordnen.

**Patentansprüche**

1. Verfahren zum Übertragen von Symbolen über eine Funkschnittstelle (V) in einem Kommunikationssystem von zumindest einer sendenden Station (BS) mit vier räumlich beabstandeten Antennen (A1, A2,...A4) zu zumindest einer empfangenden Station (MS1,...MS4,...MSk), bei dem in der zumindest einen sendenden Station (BS) drei Symbole sowie ein Hilfssymbol zu identischen Zeilenvektoren(s) einer 4x4-Matrize (S) zusammengefügt werden, wobei das Hilfssymbol derart gewählt wird, dass eine Modulo-Zwei-Summe der Symbole des Zeilenvektors (s) gleich Null ist, die Matrize (s) mit einer 4x4-Hadamard-Matrize (H) zu einer resultierenden Matrize (T) multipliziert wird, wobei die Diagonalelemente der resultierenden Matrize (T) den vier Antennen (A1, A2, A3, A4) jeweils zugeordnet werden, und das als einziges einen Wert ungleich Null aufweisende Diagonalelement einer Antenne (A4) eindeutig zugeordnet und ausschließlich über diese Antenne (A4) versendet wird.

2. Station (BS) eines Kommunikationssystems, mit einer Sende-Vorrichtung zum Übertragen von Symbolen über eine Funkschnittstelle (V) des Kommunikationssystems über vier räumlich beabstandete Antennen (A1, A2,...A4) der Station (BS) zu zumindest einer empfangenden Station (MS1,...MS4,...MS(k-1)), wobei die Sende-Vorrichtung eine Steuereinrichtung (C) und einen Speicher (M) zum Abspeichern einer 4x4-Hadamard-Matrize (H) aufweist, wobei die Sende-Vorrichtung Mittel zum Durchführen eines Verfahrens nach Anspruch 1 aufweist.

**Claims**

1. Method for transmitting symbols via an air interface (V) in a communication system of at least one transmitting station (BS) with four physically interspaced antenna (A1, A2, .. .A4), to at least one receiving station (MS1,...MS4,...MSk), whereby in the at least one transmitting station (BS) three symbols and an auxiliary symbol are combined to form identical line vector(s) of a 4x4 matrix (s), whereby the auxiliary symbol is selected in such a way that a modulo two sum of the symbols of the line vector(s) equals zero, the matrix (s) is multiplied by a 4x4 Hadamard matrix (H) to form a resultant matrix (T), whereby the diagonal elements of the resultant matrix (T) are allocated respectively to the four antennae (A1, A2, A3, A4), and the diagonal element which is the only one to show a value not equal to zero is allocated unambiguously to an antenna (A4) and is transmitted exclusively via this antenna (A4).

2. Station (BS) of a communication system with a send device for transmitting symbols via an air interface (V) of the communication system via four physically interspaced antenna (A1, A2, .. .A4) of the station (BS) to at least one receiving station (MS1,...MS4,...MS(k-1)), whereby the send device has a control device (C) and a memory (M) for storing a 4x4 Hadamard matrix (H), whereby the send device has means to implement a method according to claim 1.

**Revendications**

1. Procédé pour transmettre des symboles par une interface radio (V) dans un système de communication d'au moins une station émettrice (BS) avec quatre antennes (A1, A2, ... A4) espacées dans l'espace à au moins une station réceptrice (MS1, ... MS4, MSk), dans lequel, dans la au moins une station émettrice (BS), trois symboles et un symbole auxiliaire sont regroupés pour former des vecteurs de lignes (s) identiques d'une matrice 4x4 (S), le symbole auxiliaire étant choisi de telle sorte qu'un total modulo deux des symboles du vecteur en lignes (S) est égal à zéro, la matrice (S) est multipliée par une matrice de Hadamard 4x4 (H) pour obtenir une matrice (T) résultante, les éléments en diagonale de la matrice résultante (T) étant attribués respectivement aux quatre antennes (A1, A2, A3, A4), et qui est attribuée clairement en tant qu'unique élément en diagonale présentant une valeur différente de zéro à une antenne (A4) et est envoyée exclusivement par cette antenne (A4).

2. Station (BS) d'un système de communication, avec un dispositif d'émission pour la transmission de symboles au moyen d'une interface radio (V) du système de communication au moyen de quatre antennes (A1, A2, ... A4) disposées à distance dans l'espace de la station (BS) à au moins une station réceptrice (MS1, ... MS4, ... MS (k-1)), le dispositif d'émission présentant un dispositif de commande (C) et une mémoire (M) pour la mémorisation d'une matrice de Hadamard 4x4 (H), le dispositif d'émission présentant des moyens présentant pour la mise en oeuvre d'un procédé selon la revendication 1.

FIG 1

# FIG 2